# EUROPÄISCHE PATENTSCHRIFT

(11) **EP 2 541 077 B1**
(45) Veröffentlichungstag und Bekanntmachung des Hinweises auf die Patenterteilung: **26.10.2016**
(21) Anmeldenummer: 12401119.8
(22) Anmeldetag: 15.06.2012
(51) Int. Cl.: F16B 13/12

(54) **Dübelsystem für eine Abstandsmontage**
Dowel system for distance installation
Assemblage à cheville pour un montage d'espacement

(30) Priorität: 28.06.2011 DE 102011051378
(43) Veröffentlichungstag der Anmeldung: 02.01.2013
(73) Patentinhaber: fischerwerke GmbH & Co. KG, 72178 Waldachtal (DE)
(72) Erfinder: Nehl, Wolfgang, 72178 Waldachtal (DE)

(56) Entgegenhaltungen:
- EP-A1- 0 171 745
- EP-A2- 0 400 535
- DE-A1-102010 036 385

## Beschreibung

Die Erfindung betrifft ein Dübelsystem für eine Abstandsmontage mit den Merkmalen der Oberbegriffs des Anspruchs 1.

Aus der DE 10 2010 036 385 A1 ist ein gattungsgemäßes Dübelsystem bekannt. Das bekannte Dübelsystem weist eine Dübelhülse auf, mit einem ersten Spreizdübel, mit dem das Dübelsystem in einem tragfähigen Untergrund, beispielsweise einer Betonwand, verankert werden kann. Die Dübelhülse weist zudem einen zweiten Spreizdübel auf, zur Befestigung in einer vom Untergrund beabstandeten Wand, beispielsweise einer Vorsatzschale aus Klinkermauerwerk. Zwischen den beiden Spreizdübeln ist eine Abstandshülse angeordnet, die die beiden Spreizdübel miteinander verbindet. Das Dübelsystem umfasst zudem eine Spreizschraube, mit der die beiden Spreizdübel beim Einschrauben aufgespreizt werden.

Um eine Vorsatzschale in einem Abstand vom Untergrund zu befestigen und gegen Kippen zu sichern, wird durch die Vorsatzschale und eine zwischen der Vorsatzschale und einem tragenden Untergrund angeordnete Luft- und/oder Dämmschicht hindurch ein Bohrloch im Untergrund erstellt. In das Bohrloch wird das Dübelsystem so weit eingeführt, bis der erste Spreizdübel im Untergrund und der zweite Spreizdübel in der Vorsatzschale liegt und die Dübelhülse mit der Außenseite der Vorsatzschale bündig abschließt. Dann wird die Spreizschraube in die Dübelhülse eingeschraubt, wodurch die beiden Spreizdübel gespreizt werden und die Vorsatzschale gegen Kippen gesichert ist.

Aufgabe der Erfindung ist, ein verbessertes Dübelsystem vorzuschlagen.

Diese Aufgabe wird erfindungsgemäß durch ein Dübelsystem mit den Merkmalen des Anspruchs 1 gelöst. Das erfindungsgemäße Dübelsystem für eine Abstandsmontage weist einen ersten Spreizdübel, einen zweiten Spreizdübel und eine Spreizschraube auf. Unter "Abstandsmontage" ist in diesem Zusammenhang das Befestigen eines Gegenstandes im Abstand zu einem tragenden Untergrund gemeint, wobei der Gegenstand insbesondere eine Vorsatzschale ist. Die Spreizschraube des Dübelsystems weist einen ersten Gewindeabschnitt zum Einschrauben in den ersten Spreizdübel und einen Einzugsabschnitt zum Spreizen des zweiten Spreizdübels auf. Der Einzugsabschnitt ist gegenüber dem ersten Gewindeabschnitt im Durchmesser erweitert. Beispielsweise ist der Einzugsabschnitt als Spritzgussteil um den Schaft der Spreizschraube gespritzt. Mit "Durchmesser" ist in diesem Zusammenhang der Durchmesser eines den Einzugsabschnitt bzw. den Gewindeabschnitt der Spreizschraube umschreibenden Kreises gemeint. Der Einzugsabschnitt ist zudem derart gestaltet, dass der Einzugsabschnitt durch das Eindrehen des ersten Gewindeabschnitts in den ersten Spreizdübel in den zweiten Spreizdübel eingezogen wird. In dieser ersten Spreizphase wird der Einzugsabschnitt allein durch das Einschrauben des ersten Gewindeabschnitts in den ersten Spreizdübel in den zweiten Spreizdübel eingezogen. Der Einzugsabschnitt ist dabei derart gestaltet, dass er keinen axialen Vortrieb bewirkt. Im Gegenteil setzt der Einzugsabschnitt dem Einziehen in den zweiten Spreizdübel einen Widerstand entgegen. Dieser Widerstand muss allein durch den Vortrieb des Gewindeabschnitts im ersten Spreizdübel überwunden werden. Hierzu muss der erste Spreizdübel eine axiale Zugkraft in den Untergrund einleiten können, die größer ist, als die Kraft die notwendig ist, um den Einzugsabschnitt in den zweiten Spreizdübel einzuziehen und den Widerstand zu überwinden. Ist dies der Fall, so ist sichergestellt, dass der erste Spreizdübel im Untergrund sicher verankert ist und Lasten von dem Dübelsystem in den Untergrund übertragen kann.

Erfindungsgemäß ist an der Spreizschraube des Dübelsystems in Einbringrichtung hinter dem Einzugsabschnitt ein zweiter Gewindeabschnitt angeordnet. Nach dem Einziehen des Einzugsabschnitts in den zweiten Spreizdübel greift der zweite Gewindeabschnitt in den zweiten Spreizdübel ein und erzeugt in dieser zweiten Spreizphase einen axialen Vortrieb, der das Einschrauben der Spreizschraube in die beiden Spreizdübel erleichtert. Der zweite Gewindeabschnitt unterstützt nicht nur den axialen Vortrieb der Spreizschraube, sondern reduziert zudem den Eindrehwiderstand der Spreizschraube in den zweiten Spreizdübel. Somit ist das zum Einschrauben der Spreizschraube des erfindungsgemäßen Dübelsystems notwendige Drehmoment geringer als bei dem aus dem Stand der Technik bekannten Dübelsystem ohne zweiten Gewindeabschnitt. Dies hat insbesondere den Vorteil, dass die Spreizschraube mit einem im Vergleich geringeren Durchmesser verwendet werden kann, die bei einem höheren, für das Einschrauben einer Spreizschraube ohne zweiten Gewindeabschnitt notwendigen Drehmoment abreißen würde.

Vorzugsweise weist der Einzugsabschnitt einen konusförmigen Erweiterungsabschnitt auf, wobei der Durchmesser des Erweiterungsabschnitts zum in Einbringrichtung hinteren Ende der Spreizschraube zunimmt. Mit "konusförmig" ist hier allgemein eine Art Keilform gemeint. Der Erweiterungsabschnitt muss nicht zwingend mit einem kreisförmigen Querschnitt ausgeführt sein, sondern kann beispielsweise quadratisch sein, so dass der Einzugsabschnitt pyramidenstumpfförmig ausgestaltet ist. Ein wesentlicher Teil des zweiten Gewindeabschnitts ist dabei in axialer Richtung vom Erweiterungsabschnitt beabstandet, so dass es während der ersten Spreizphase, in der der Einzugsabschnitt allein durch das Einschrauben des ersten Gewindeabschnitts in den ersten Spreizdübel in den zweiten Spreizdübel eingezogen wird, keinen axialen Vortrieb erzeugen kann. Insbesondere ist das in Einbringrichtung vordere Ende des zweiten Gewindeabschnitts in axialer Richtung vom Erweiterungsabschnitt beabstandet. Durch die konische Ausführung des Erweiterungsabschnitts ist gewährleistet, dass der erste Gewindeabschnitt der Spreizschraube in den ersten Spreizdübel eingreifen und eingeschraubt werden kann, wobei sich der Widerstand des Einzugsabschnitts aufgrund der konischen Ausführung des Erweiterungsabschnitt beim Einschrauben der Spreizschraube kontinuierlich erhöht. Zwischen dem konischen Erweiterungsabschnitt und dem zweiten Gewindeabschnitt kann ein zylindrischer Abschnitt angeordnet sein. Der Erweiterungsabschnitt und/oder der zylindrische Abschnitt können eine raue Oberfläche und/oder Rauheitselemente wie umlaufende Lamellen aufweisen, mit denen der Widerstand, der dem Eindringen des Einzugsabschnitts in den zweiten Spreizdübel entgegenwirkt, durch ihre geometrische Ausgestaltung gesteuert werden kann. Alternativ ist auch denkbar, dass der Erweiterungsabschnitt zylindrisch ausgebildet ist und der zweite Spreizdübel eine konische Querschnittsverengung zur Aufnahme des Einzugsabschnitts aufweist.

Bei einer bevorzugten Ausführungsform des erfindungsgemäßen Dübelsystems ist die axiale Länge des Einzugsabschnitts größer oder gleich dem maximalen Durchmesser des erstens Gewindeabschnitts. Insbesondere ist die axiale Länge größer oder gleich dem maximalen Durchmesser des ersten Spreizdübels. Hierdurch wird erreicht, dass auch nach einem Einbringen des Dübelsystems in das Bohrloch, beispielsweise durch Schläge mit einem Hammer auf die nicht vollständig eingeschraubte Spreizschraube, der zweite Gewindeabschnitt noch einen genügend großen axialen Abstand zum zweiten Spreizdübel aufweist, so dass in der ersten Spreizphase ausschließlich der erste Gewindeabschnitt den axialen Vortrieb der Spreizschraube schafft, wodurch der Nachweis, dass der erste Spreizdübel genügend fest im Untergrund verankert ist, erbracht ist.

Bei einer weiteren bevorzugten Ausführungsform des erfindungsgemäßen Dübelsystems ist die Gewindesteigung des zweiten Gewindeabschnitts im Wesentlichen gleich der Gewindesteigung des ersten Gewindeabschnitts. Hierdurch wird erreicht, dass die Spreizschraube auch in der zweiten Spreizphase, also beim gleichzeitigen Einschrauben beider Gewindeabschnitte in die Spreizdübel, gleichmäßig einschraubt wird. Der zweite Gewindeabschnitt behindert somit nicht das Einschrauben des ersten Gewindeabschnitts in den ersten Spreizdübel.

Bei einer weiteren bevorzugten Ausgestaltungsform des erfindungsgemäßen Dübelsystems ist der Durchmesser des zweiten Gewindeabschnitts im Wesentlichen gleich dem maximalen Durchmesser des Einzugsabschnitts. "Im Wesentlichen gleich" bedeutet hier eine Abweichung von bis zu 20 Prozent, insbesondere von bis zu 5 bis 10 Prozent. Hierdurch wird erreicht, dass durch das Einschrauben des zweiten Gewindeabschnitts in den zweiten Spreizdübel sich das zum Einschrauben der Spreizschraube notwendige Drehmoment nicht wesentlich erhöht.

Weiterhin ist bevorzugt, dass die Gewindeflanke des zweiten Gewindeabschnitts abgerundet ist. Eine abgerundete Gewindeflanke hat gegenüber einem Spitzgewinde den Vorteil, dass die Gewindeflanke nicht oder nur geringfügig in das Material des zweiten Spreizdübels einschneidet, sondern das Material des zweiten Spreizdübels radial nach außen verdrängt. Für das Einschneiden eines Spitzgewindes ist ein relativ hohes Drehmoment notwendig, so dass das Drehmoment, das zum Eindrehen der Spreizschraube in der zweiten Spreizphase notwendig ist, durch die Verwendung eines abgerundeten Gewindes relativ gering ist. Der zweite Gewindeabschnitt erzeugt auch mit einer abgerundeten Gewindeflanke einen ausreichenden axialen Vortrieb, um das Einschrauben der Spreizschraube in der zweiten Spreizphase zu erleichtern.

Die Spreizschraube einer weiteren bevorzugten Ausführungsform des erfindungsgemäßen Dübelsystems weist in Einbringrichtung hinter dem zweiten Gewindeabschnitt einen Schraubenkopf auf. Der Durchmesser des Schraubenkopfs ist kleiner oder gleich dem 1,15-fachen Durchmesser des zweiten Gewindeabschnitts. Insbesondere ist der Schraubenkopf kleiner oder gleich dem 1,1-fachen Durchmesser des zweiten Gewindeabschnitts. Da der Durchmesser des Schraubenkopfs somit im Wesentlichen gleich dem Durchmesser des zweiten Gewindeabschnitts ist, wird verhindert, dass der Schraubenkopf, wenn er in das Bohrloch hinein versenkt wird, nicht am zu befestigenden Gegenstand, beispielsweise einem Klinkerstein einer Vorsatzschale, anliegt, so dass ein weiteres Einschrauben der Spreizschraube eine zusätzliche Zugkraft in der Spreizschraube verursachen würde. Diese zusätzliche Zugkraft kann zu einer Erhöhung der Spannungen und zu einem Abreißen der Spreizschraube führen. Ein Bruch der Spreizschraube durch zusätzliche Zugspannungen wird durch die spezielle Ausbildung des Schraubenkopfs der Spreizschraube verhindert.

Bei einer weiteren bevorzugten Ausführungsform des erfindungsgemäßen Dübelsystems ist der erste Spreizdübel mit dem zweiten Spreizdübel durch eine Abstandshülse verbunden, mit der die Spreizdübel beispielsweise einstückig zu einer Dübelhülse verbunden sind. Erfindungsgemäß ist an der Abstandshülse mindestens eine die Abstandshülse in Umfangsrichtung umlaufende Nut angeordnet. Wird das Dübelsystem zur Befestigung einer Vorsatzschale verwendet, so befindet sich die Abstandshülse im Bereich der Isolierung zwischen der Vorsatzschale und dem tragenden Untergrund, also im Bereich der Luft- oder Dämmschicht. Die Nut verhindert, dass Tauwasser, das im Bereich der Dämmung anfallen kann, der Abstandshülse entlang, hin zum tragenden Untergrund fließt. Das Tauwasser sammelt sich im Bereich der Nut und tropft von der Abstandshülse ab. Insbesondere können mehrere umlaufende Nuten über die axiale Länge der Abstandshülse verteilt angeordnet sein.

Zur einfachen Herstellung der Abstandshülse ist die umlaufende Nut vorzugsweise schraubenlinienförmig ausgebildet. Hierdurch wird erreicht, dass beim Spritzgießen der Abstandshülse aus Kunststoff ein Spritzwerkzeug schnell gefüllt werden kann, ohne dass sich Hohlräume bilden. Die Abstandshülse ist somit schnell und kostengünstig herstellbar.

Weiterhin ist bevorzugt, dass sich die schraubenlinienförmige Nut über einen wesentlichen Teil, insbesondere über im Wesentlichen die gesamte axiale Länge der Abstandshülse erstreckt, so dass ein Fließen von Tauwasser im gesamten Bereich der Abstandshülse verhindert wird. Mit "wesentlicher Teil" ist mindestens 2/3 der axialen Länge der Abstandshülse gemeint.

Die Erfindung wird nachfolgend anhand von drei in der Zeichnung dargestellten Ausführungsbeispielen näher beschrieben.

Es zeigen:
- Figur 1: ein erstes erfindungsgemäßes Dübelsystem in einer Seitenansicht;
- Figur 2: den hinteren Bereich der Spreizschraube des ersten erfindungsgemäßen Dübelsystems in einer perspektivischen Ansicht;
- Figur 3: eine Spreizschraube eines zweiten erfindungsgemäßen Dübelsystems in einer Seitenansicht;
- Figur 4: den hinteren Bereich der Spreizschraube des zweiten erfindungsgemäßen Dübelsystems in einer Seitenansicht; und
- Figur 5: den hinteren Bereich einer Spreizschraube eines dritten erfindungsgemäßen Dübelsystems in einer perspektivischen Ansicht.

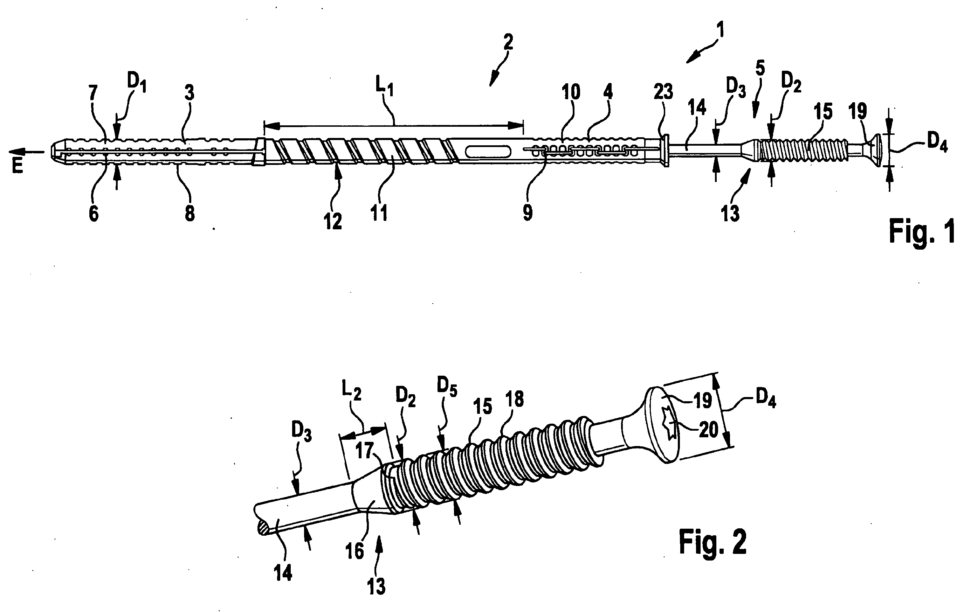

In Figur 1 ist ein erstes erfindungsgemäßes Dübelsystem 1 für eine Abstandsmontage dargestellt. Das Dübelsystem 1 weist eine Dübelhülse 2 mit einem ersten Spreizdübel 3 und einem zweiten Spreizdübel 4 sowie eine Spreizschraube 5 auf. Der erste Spreizdübel 3 ist am in Einbringrichtung E vorderen Ende der Dübelhülse 2 angeordnet und weist einen in axialer Richtung verlaufenden Schlitz 6 auf, der die im Wesentlichen zylindrische Wand des ersten Spreizdübels 3 in zwei halbschalenförmige Spreizzungen 7 unterteilt. Die Spreizzungen 7 laufen an ihrem vorderen Ende konisch zu, um ein Einführen des ersten Spreizdübels 3 in ein nicht dargestelltes Bohrloch zu erleichtern. Zudem weisen die Spreizzungen 7 Halterippen 8 auf, um einen möglichst guten Halt des ersten Spreizdübels 3 in dem hier nicht dargestellten Bohrloch zu gewährleisten. Der Durchmesser eines die Halterippen 8 umschreibenden Kreises entspricht dem maximalen Durchmesser D₁ des ersten Spreizdübels 3, wobei der maximale Durchmesser D₁ des ersten Spreizdübels 3 im Wesentlichen gleich dem maximalen Durchmesser der Dübelhülse 2 ist. Wird die Spreizschraube 5 in die Dübelhülse 2 eingeschraubt, so wird der erste Spreizdübel 3 durch den in Figur 1 nicht sichtbaren ersten Gewindeabschnitt der Spreizschraube 5 aufgespreizt, wodurch das Dübelsystem 1 durch den ersten Spreizdübel 3 in einem tragenden Untergrund, beispielsweise einer Betonwand, verankert werden kann (nicht dargestellt).

Am hinteren Ende der Dübelhülse 2 ist der zweite Spreizdübel 4 angeordnet. Der zweite Spreizdübel 4 weist mehrere in axialer Richtung verlaufende, relativ kurze und in Umfangsrichtung zueinander versetzte schlitzartige Spreizöffnungen 9 auf, die den zweiten Spreizdübel 4 in zwei Spreizschalen 10 mit gerippter Oberfläche unterteilen. Der zweite Spreizdübel 4 dient zur Befestigung eines nicht dargestellten Gegenstandes im Abstand zu einem ebenfalls nicht dargestellten Untergrund. Bei dem Gegenstand handelt es sich beispielsweise um eine Vorsatzschale aus Klinkermauerwerk, wobei der zweite Spreizdübel 4 mittels der Spreizschraube 5 im Klinkermauerwerk aufgespreizt wird, so dass das Dübelsystem 1 das Klinkermauerwerk der Vorsatzschale in einem bestimmten Abstand vom Untergrund gegen Kippen sichert. Der zweite Spreizdübel 4 schließt die Dübelhülse 2 am hinteren Ende mit einem umlaufenden Bund 23 ab. Beim Einführen des Dübelsystems 1 in ein nicht dargestelltes Bohrloch verhindert der Bund 23, dass die Dübelhülse 2 des Dübelsystems 1 zu tief in das Bohrloch gesteckt wird und sich die beiden Spreizdübel 3, 4 nicht in der gewünschten Position befinden.

Zwischen dem ersten Spreizdübel 3 und dem zweiten Spreizdübel 4 ist eine Abstandshülse 11 angeordnet, die mit den beiden Spreizdübeln 3, 4 einstückig verbunden ist. Die beiden Spreizdübel 3, 4 und die Abstandshülse 11 bilden zusammen die Dübelhülse 2, die im Spritzgussverfahren aus Kunststoff hergestellt ist. Die Abstandshülse 11 weist im Wesentlichen einen kreisringförmigen Querschnitt auf, wobei der maximale Außendurchmesser der Abstandshülse 11 im Wesentlichen dem maximalen Durchmesser D₁ des ersten Spreizdübels 3 entspricht. Die axiale Länge L₁ der Abstandshülse 11 entspricht im Wesentlichen dem Abstand zwischen einem Untergrund und einem zu befestigenden Gegenstand (beides nicht dargestellt), also im Fall einer Vorsatzschale der Dicke der Luft- und/oder Dämmschicht, die die Abstandshülse 11 überbrücken muss. An der Mantelfläche der Abstandshülse 11 ist eine schraubenlinienförmig umlaufende Nut 12 angeordnet, die sich ausgehend vom in Einbringrichtung E vorderen Ende der Abstandshülse 11 über ungefähr 3/4 der axialen Länge L₁ der Abstandshülse 11 erstreckt. Die schraubenlinienförmig umlaufende Nut 12 dient dazu, im Bereich der Dämmschicht anfallendes Tauwasser (nicht dargestellt) zu sammeln, so dass das Tauwasser lokal abtropfen kann und nicht entlang der Dübelhülse 2 fließt und in den Untergrund oder die Vorsatzschale eindringt und dort Feuchteschäden verursacht.

Figur 1 zeigt das erfindungsgemäße Dübelsystem 1 so, wie es in ein nicht dargestelltes Bohrloch eingebracht wird. Die Spreizschraube 5 ist nur zum Teil in die Dübelhülse 2 eingeschraubt. Der in Figur 1 nicht sichtbare erste Gewindeabschnitt liegt in diesem Zustand noch im Wesentlichen hinter dem ersten Spreizdübel 3 in der Abstandshülse 11. Die Spreizschraube 5 weist einen Einzugsabschnitt 13 zum Spreizen des zweiten Spreizdübels 4 auf, wobei der maximale Durchmesser D₂ des Einzugsabschnitts 13 gegenüber dem maximalen Durchmesser des ersten Gewindeabschnitts, der im Wesentlichen dem maximalen Durchmesser D₃ des Schafts 14 der Spreizschraube 5 entspricht, erweitert ist (vgl. Figur 2). Wird die Spreizschraube 5 des Dübelsystems 1, wie es in Figur 1 dargestellt ist, in die Dübelhülse 2 eingeschraubt, so bewirkt zunächst in einer ersten Spreizphase ausschließlich der nicht sichtbare erste Gewindeabschnitt, der beim Einschrauben mit der Wand der Abstandshülse 11 und des ersten Spreizdübels 3 in Eingriff steht, den zum Einziehen des Einzugsabschnitts 13 in den zweiten Spreizdübel 4 notwendigen Vortrieb. Erst nach dem Einziehen des Einzugsabschnitts 13 in den zweiten Spreizdübel 4, der hierdurch aufgespreizt wird, greift ein in Einbringrichtung E hinter dem Einzugsabschnitt 13 angeordneter zweiter Gewindeabschnitt 15 in den zweiten Spreizdübel 4 ein und bewirkt in dieser zweiten Spreizphase einen zusätzlichen Vortrieb, wodurch die Spreizschraube 5 mit einem geringeren Drehmoment in die Dübelhülse 2 eingedreht werden kann.

Der Einzugsabschnitt 13 weist einen konusförmigen Erweiterungsabschnitt 16 in Form eines Kegelstumpfs auf, der sich im Durchmesser entgegen der Einbringrichtung E vom Durchmesser D₃ bis zum Durchmesser D₂ erweitert. Die axiale Länge L₂ des Einzugsabschnitts 13 ist größer als der maximale Durchmesser des ersten Gewindeabschnitts, der im Wesentlichen dem maximalen Durchmesser D₃ des Schafts 14 der Spreizschraube 5 entspricht. Ein wesentlicher Teil des zweiten Gewindeabschnitts 15 ist in axialer Richtung vom Erweiterungsabschnitt 16 beabstandet, so dass der zweite Gewindeabschnitt 15 erst nach dem Einziehen des Einzugsabschnitts 13 in den zweiten Spreizdübel 4 einen Vortrieb erzeugen und das Einschrauben der Spreizschraube 5 in die Dübelhülse 2 unterstützen kann. Das in Einbringrichtung E vordere Ende 17 des zweiten Gewindeabschnitts 15 berührt den Erweiterungsabschnitt 16 nicht, sondern weist einen geringen Abstand vom Erweiterungsabschnitt 16 auf. Die Gewindesteigung des zweiten Gewindeabschnitts 15 entspricht im Wesentlichen der Gewindesteigung des ersten, hier nicht sichtbaren Gewindeabschnitts. Zudem ist der maximale Durchmesser D₅ des zweiten Gewindeabschnitts 15 im Wesentlichen gleich dem maximalen Durchmesser D₂ des Einzugsabschnitts 13. Die Gewindeflanke 18 des zweiten Gewindeabschnitts 15 ist abgerundet, was bewirkt, dass die Gewindeflanke 18 beim Einschrauben in den zweiten Spreizdübel 4 die Wand des Spreizdübels 4 in radialer Richtung nach außen verdrängt und nur unwesentlich in das Material der Wand einschneidet. Dies führt zu einer großen Spreizung der Spreizschalen 10 des zweiten Spreizdübels 4 und zu einer Verringerung des Drehmoments, da durch die gerundete Gewindeflanke 18 der Widerstand zwischen der Wand des Spreizdübels 4 und dem zweiten Gewindeabschnitt 15 im Vergleich zu einer spitzen Gewindeflanke, die das Material schneiden würde, reduziert ist. Ein verringertes Drehmoment bedeutet auch, dass die Torsionsspannungen in der Schraube reduziert sind, wodurch der Querschnitt der Spreizschraube 5 minimiert werden kann.

Am in Einbringrichtung E hinteren Ende weist die Spreizschraube 5 einen Schraubenkopf 19 mit einer Werkzeugaufnahme 20 zum Ansetzen eines Drehwerkzeugs, beispielsweise eines Bits eines Schraubers (nicht dargestellt), auf. Der Durchmesser D₄ des Schraubenkopfs 19 ist in diesem Fall größer als der Durchmesser D₂ des Einzugsabschnitts, so dass er beim Einschrauben am Bund 23 und somit am zu befestigenden Gegenstand anliegt, wenn die Spreizschraube 5 weit genug in die Dübelhülse 2 eingeschraubt ist.

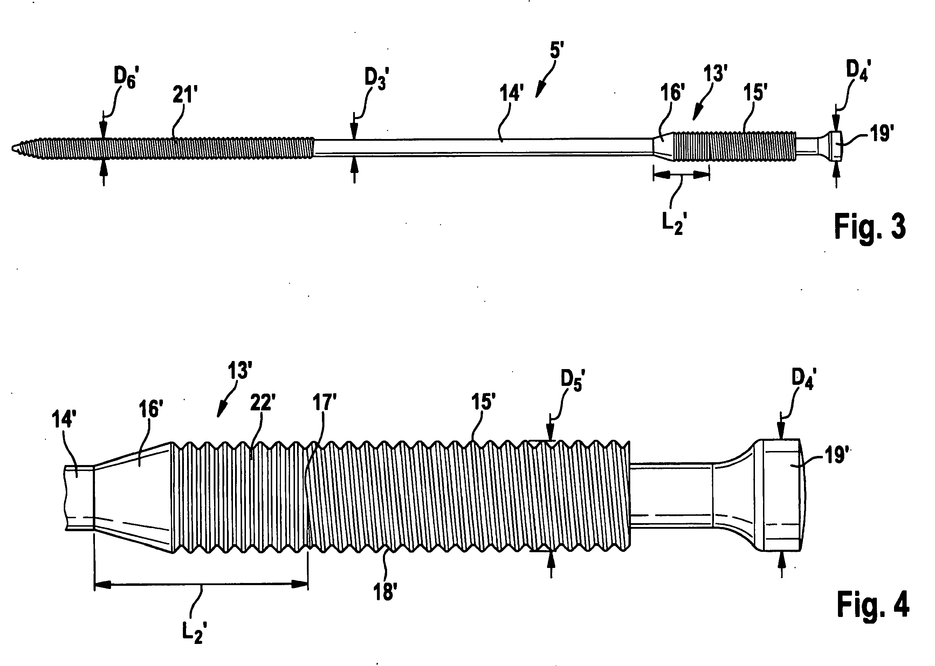

Die Figuren 3 bis 5 zeigen alternative Ausführungsformen der Spreizschraube 5, 5', 5" des in Figur 1 dargestellten Dübelsystems 1. Um Wiederholungen zu vermeiden, wird im Folgenden nur auf die Unterschiede eingegangen.

Abweichend von der in den Figuren 1 und 2 dargestellten Spreizschraube 5 des erfindungsgemäßen Dübelsystems 1 weist die in den Figuren 3 und 4 dargestellte Spreizschraube 5' zwischen dem konusförmigen Erweiterungsabschnitt 16' und dem zweiten Gewindeabschnitt 15' einen zylindrischen Abstandsabschnitt 22' auf, der sich in axialer Richtung erstreckt, so dass die axiale Länge L₂' des Einzugsabschnitts 13' größer als der maximale Durchmesser D₁ des ersten Spreizdübels 3 ist. Zudem ist der Durchmesser D₄' des Schraubenkopfs 19' im Wesentlichen gleich dem Durchmesser D₅' des zweiten Gewindeabschnitts 15'. Wird die Spreizschraube 5' in die in der Figur 1 dargestellte Dübelhülse 2 eingeschraubt, so verhindert der geringe Durchmesser D₄' des Schraubenkopfs 19', dass der Schraubenkopf 19' am Bund 23 beziehungsweise am zu befestigenden Gegenstand anliegt, wodurch zusätzliche Zugkräfte im Schaft 14' der Schraube 5' entstehen würden. In Figur 3 ist auch der erste Gewindeabschnitt 21' sichtbar, der schon für die in den Figuren 1 und 2 dargestellten Spreizschraube 5 beschrieben wurde. Der erste Gewindeabschnitt 20' und der zweite Gewindeabschnitt 15' weisen im Wesentlichen die gleiche Gewindesteigung auf, so dass sich beide Gewindeabschnitte 15', 21' beim Einschrauben nicht behindern und gegenseitig unterstützen.

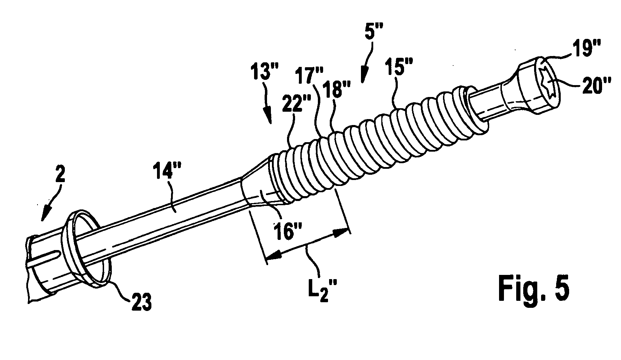

Die in Figur 5 dargestellte Spreizschraube 5" entspricht im Wesentlichen der Spreizschraube 5' der Figuren 3 und 4. Der wesentliche Unterschied ist die Ausgestaltung des zweiten Gewindeabschnitts 15", mit einer vergrößerten und stärker gerundeten Gewindeflanke 18" sowie einer vergrößerten Gewindesteigung. Auch in diesem Fall ist die Gewindesteigung des ersten Gewindeabschnitts, der hier nicht sichtbar ist, an die Gewindesteigung des zweiten Gewindeabschnitts 15" angepasst und stimmt mit dieser im Wesentlichen überein.

### Bezugszeichenliste

### Dübelsystem für eine Abstandsmontage

- 1: Dübelsystem
- 2: Dübelhülse
- 3: erster Spreizdübel
- 4: zweiter Spreizdübel
- 5, 5', 5": Spreizschraube
- 6: Schlitz
- 7: Spreizzunge
- 8: Halterippe
- 9: Spreizöffnung
- 10: Spreizschale
- 11: Abstandshülse
- 12: Nut
- 13, 13', 13": Einzugsabschnitt
- 14, 14', 14": Schaft der Spreizschraube 5, 5', 5"
- 15, 15', 15": zweiter Gewindeabschnitt
- 16, 16', 16": konusförmiger Erweiterungsabschnitt
- 17, 17', 17": vorderes Ende des zweiten Gewindeabschnitts 15, 15', 15"
- 18, 18', 18": Gewindeflanke des zweiten Gewindeabschnitts 15, 15', 15"
- 19, 19', 19": Schraubenkopf
- 20, 20": Werkzeugaufnahme
- 21': erster Gewindeabschnitt
- 22', 22": Abstandsabschnitt
- 23: Bund
- E: Einbringrichtung
- D₁: Durchmesser des ersten Spreizdübels 3
- D₂, D₂', D₂": Durchmesser des Einzugsabschnitts 13, 13', 13"
- D₃, D₃', D₃": Durchmesser des Schafts 14, 14', 14"
- D₄, D₄', D₄": Durchmesser des Schraubenkopfs 19, 19', 19"
- D₅, D₅', D₅": Durchmesser des zweiten Gewindeabschnitts 15, 15', 15"
- D₆': Durchmesser des erste Gewindeabschnitts 21'
- L₁: axiale Länge der Abstandshülse 11
- L₂, L₂', L₂": axiale Länge des Einzugsabschnitts 13, 13', 13"

## Patentansprüche

1. Dübelsystem (1) für eine Abstandsmontage,
- mit einem ersten Spreizdübel (3) und einem zweiten Spreizdübel (4) und einer Spreizschraube (5, 5', 5"),
- wobei die Spreizschraube (5, 5', 5") einen ersten Gewindeabschnitt (21') zum Einschrauben in den ersten Spreizdübel (3) und einen Einzugsabschnitt (13, 13', 13") zum Spreizen des zweiten Spreizdübels (4) aufweist,
- wobei der Einzugsabschnitt (13, 13', 13") gegenüber dem ersten Gewindeabschnitt (21') im Durchmesser erweitert ist, und derart gestaltet ist,
- dass der Einzugsabschnitt (13, 13', 13") durch das Einschrauben des ersten Gewindeabschnitts (21') In den ersten Spreizdübel (3) in den zweiten Spreizdübel (4) eingezogen wird, und
- wobei in Einbringrichtung (E) hinter dem Einzugsabschnitt (13, 13', 13") ein zweiter Gewindeabschnitt (15, 15', 15") angeordnet ist,
**dadurch gekennzeichnet,**
**dass** der Durchmesser (D₅, D₅', D₅") des zweiten Gewindeabschnitts (15, 15', 15") im Wesentlichen gleich dem maximalen Durchmesser (D₂, D₂', D₂") des Einzugsabschnitts (13, 13', 13") ist.

2. Dübelsystem nach Anspruch 1, **dadurch gekennzeichnet,**
- **dass** der Einzugsabschnitt (13, 13', 13") einen konusförmigen Erweiterungsabschnitt (16, 16', 16") aufweist, und
- **dass** ein wesentlicher Teil des zweiten Gewindeabschnitts (15, 15', 15") in axialer Richtung vom Erweiterungsabschnitt (16, 16', 16") beabstandet ist.

3. Dübelsystem nach einem der Ansprüche 1 oder 2, **dadurch gekennzeichnet, dass** die axiale Länge (L₂, L₂', L₂") des Einzugsabschnitts (13, 13', 13") größer oder gleich dem maximalen Durchmesser (D₆') des ersten Gewindeabschnitts (21'), insbesondere größer oder gleich dem maximalen Durchmesser (D₁) des ersten Spreizdübels (3) ist.

4. Dübelsystem nach einem der Ansprüche 1 bis 3, **dadurch gekennzeichnet, dass** die Gewindesteigung des zweiten Gewindeabschnitts (15, 15', 15") im Wesentlichen gleich der Gewindesteigung des ersten Gewindeabschnitts (21') ist.

5. Dübelsystem nach einem der Ansprüche 1 bis 4, **dadurch gekennzeichnet, dass** die Gewindeflanke (18, 18', 18") des zweiten Gewindeabschnitts (15, 15', 15") abgerundet ist.

6. Dübelsystem nach einem der Ansprüche 1 bis 5, **dadurch gekennzeichnet, dass** die Spreizschraube (5', 5") in Einbringrichtung (E) hinter dem zweiten Gewindeabschnitt (15', 15") einen Schraubenkopf (19', 19") aufweist, mit einem Durchmesser (D₄', D₄"), der kleiner oder gleich dem 1,15-fachen, insbesondere dem 1,1-fachen Durchmesser (D₅', D₅") des zweiten Gewindeabschnitts (15', 15") ist.

7. Dübelsystem nach einem der Ansprüche 1 bis 6, **dadurch gekennzeichnet, dass** der erste Spreizdübel (3) mit dem zweiten Spreizdübel (4) durch eine Abstandshülse (11) verbunden ist, an der eine umlaufende Nut (12) angeordnet ist.

8. Dübelsystem nach Anspruch 7, **dadurch gekennzeichnet,**
**dass** die umlaufende Nut (12) schraubenlinienförmig ist.

9. Dübelsystem nach Anspruch 8, **dadurch gekennzeichnet,**
**dass** sich die schraubenlinienförmige Nut (12) über einen wesentlichen Teil, insbesondere über im Wesentlichen die gesamte axiale Länge (L₁) der Abstandshülse (11) erstreckt.

## Claims

1. Fixing plug system (1) for a stand-off mounting,
- having a first expansible fixing plug (3) and a second expansible fixing plug (4) and an expander screw (5, 5', 5"),
- wherein the expander screw (5, 5', 5") has a first threaded portion (21') for screwing into the first expansible fixing plug (3) and a draw-in portion (13, 13', 13") for expanding the second expansible fixing plug (4),
- wherein the draw-in portion (13, 13', 13") is larger in diameter than the first threaded portion (21') and is configured in such a way that
- the draw-in portion (13, 13', 13") is drawn into the second expansible fixing plug (4) by the screwing-in of the first threaded portion (21') into the first expansible fixing plug (3), and
- wherein a second threaded portion (15, 15', 15") is arranged to the rear of the draw-in portion (13, 13', 13") in the direction of introduction (E),
**characterised in that**
the diameter (D₅, D₅', D₅") of the second threaded portion (15, 15', 15") is substantially equal to the maximum diameter (D₂, D₂', D₂") of the draw-in portion (13, 13', 13").

2. Fixing plug system according to claim 1, **characterised in that**
- the draw-in portion (13, 13', 13") has a cone-shaped widening portion (16, 16', 16"), and
- a substantial portion of the second threaded portion (15, 15', 15") is spaced apart from the widening portion (16, 16', 16") in the axial direction.

3. Fixing plug system according to either one of claims 1 and 2, **characterised in that**
the axial length (L₂, L₂', L₂") of the draw-in portion (13, 13', 13") is greater than or equal to the maximum diameter (D₆') of the first threaded portion (21'), especially greater than or equal to the maximum diameter (D₁) of the first expansible fixing plug (3).

4. Fixing plug system according to any one of claims 1 to 3, **characterised in that** the thread pitch of the second threaded portion (15, 15', 15") is substantially equal to the thread pitch of the first threaded portion (21').

5. Fixing plug system according to any one of claims 1 to 4, **characterised in that** the thread flank (18, 18', 18") of the second threaded portion (15, 15', 15") is rounded.

6. Fixing plug system according to any one of claims 1 to 5, **characterised in that** the expander screw (5', 5") has a screw head (19', 19") to the rear of the second threaded portion (15', 15") in the direction of introduction (E), with a diameter (D₄', D₄") that is smaller than or equal to 1.15 times, especially 1.1 times, the diameter (D₅', D₅") of the second threaded portion (15', 15").

7. Fixing plug system according to any one of claims 1 to 6, **characterised in that** the first expansible fixing plug (3) is joined to the second expansible fixing plug (4) by a spacer sleeve (11) on which a circumferential groove (12) is arranged.

8. Fixing plug system according to claim 7, **characterised in that** the circumferential groove (12) is helical.

9. Fixing plug system according to claim 8, **characterised in that** the helical groove (12) extends over a substantial portion of the spacer sleeve (11), especially over substantially the entire axial length (L₁) thereof.

## Revendications

1. Système (1) d'ancrage chevillé conçu pour un montage à distance,
- comprenant une première cheville expansible (3), une seconde cheville expansible (4) et une vis d'écartement (5, 5', 5"),
- ladite vis d'écartement (5, 5', 5") comportant un premier tronçon fileté (21') dévolu au vissage dans ladite première cheville expansible (3), et un tronçon de pénétration (13, 13', 13") affecté à l'écartement de ladite seconde cheville expansible (4),
- sachant que le tronçon de pénétration (13, 13', 13") présente un diamètre élargi par rapport au premier tronçon fileté (21'), et est configuré de façon telle
- que ledit tronçon de pénétration (13, 13', 13") soit enfoncé dans la seconde cheville expansible (4) suite au vissage dudit premier tronçon fileté (21') dans la première cheville expansible (3), et
- sachant qu'un second tronçon fileté (15, 15', 15") est disposé derrière ledit tronçon de pénétration (13, 13', 13") dans la direction d'insertion (E),
**caractérisé par le fait**
**que** le diamètre (D₅, D_{5'}, D_{5"}) du second tronçon fileté (15, 15', 15") est égal, pour l'essentiel, au diamètre maximal (D₂, D_{2'}, D_{2"}) du tronçon de pénétration (13, 13', 13").

2. Système d'ancrage chevillé selon la revendication 1, **caractérisé par le fait**
- **que** le tronçon de pénétration (13, 13', 13") comporte une zone tronconique d'élargissement (16, 16', 16"), et
- **qu'**une part substantielle du second tronçon fileté (15, 15', 15") est distante de ladite zone d'élargissement (16, 16', 16") dans la direction axiale.

3. Système d'ancrage chevillé selon l'une des revendications 1 ou 2,
**caractérisé par le fait**
**que** la longueur axiale (L₂, L_{2'}, L_{2"}) du tronçon de pénétration (13, 13', 13") est supérieure ou égale au diamètre maximal (D_{6'}) du premier tronçon fileté (21'), notamment supérieure ou égale au diamètre maximal (D₁) de la première cheville expansible (3).

4. Système d'ancrage chevillé selon l'une des revendications 1 à 3, **caractérisé par le fait**
**que** le pas du filetage du second tronçon fileté (15, 15', 15") est, pour l'essentiel, identique au pas du filetage du premier tronçon fileté (21').

5. Système d'ancrage chevillé selon l'une des revendications 1 à 4, **caractérisé par le fait**
**que** le flanc (18, 18', 18") du filetage du second tronçon fileté (15, 15', 15") est arrondi.

6. Système d'ancrage chevillé selon l'une des revendications 1 à 5, **caractérisé par le fait**
**que** la vis d'écartement (5', 5") présente, derrière le second tronçon fileté (15', 15") dans la direction d'insertion (E), une tête (19', 19") pourvue d'un diamètre (D_{4'}, D_{4"}) inférieur ou égal à 1,15 fois, notamment à 1,1 fois le diamètre (D_{5'}, D_{5"}) dudit second tronçon fileté (15', 15").

7. Système d'ancrage chevillé selon l'une des revendications 1 à 6, **caractérisé par le fait**
**que** la première cheville expansible (3) est reliée à la seconde cheville expansible (4) par l'intermédiaire d'une douille d'espacement (11) sur laquelle se trouve une rainure périphérique (12).

8. Système d'ancrage chevillé selon la revendication 7, **caractérisé par le fait**
**que** la rainure périphérique (12) est de configuration hélicoïdale.

9. Système d'ancrage chevillé selon la revendication 8, **caractérisé par le fait**
**que** la rainure hélicoïdale (12) s'étend sur une part substantielle, en particulier, pour l'essentiel, sur toute la longueur axiale (L₁) de la douille d'espacement (11).
